# EUROPEAN PATENT SPECIFICATION

(11) **EP 1 391 068 B1**
(45) Date of publication and mention of the grant of the patent: **12.11.2008**
(21) Application number: 02769518.8
(22) Date of filing: 15.05.2002
(51) Int. Cl.: H04J 3/08, H04J 3/14

(54) **RESTORATION PROTECTION IN COMMUNICATION NETWORKS**
WIEDERHERSTELLUNG ZUM SCHUTZ IN KOMMUNIKATIONSNETZWERKEN
PROTECTION DE RETABLISSEMENT DANS DES RESEAUX DE COMMUNICATION

(30) Priority: 15.05.2001 GB 0111869
(43) Date of publication of application: 25.02.2004
(73) Proprietor: Ericsson AB, Stockholm (SE)
(72) Inventor: BARKER, Andrew, James, Attenborough, Nottingham NG9 6BP (GB)
(74) Representative: Parkinson, Neil Scott
(86) International application number: PCT/GB2002/002270
(87) International publication number: WO 2002/093803

(56) References cited:
- EP-A- 0 844 755
- EP-A- 1 056 234
- US-A- 5 442 620
- US-B1- 6 205 154

## Description

This invention relates to restoration protection in communication networks. More particularly it concerns restoration protection in connection orientated communications networks such as optical communication networks.

Communication networks can be classified as those which are connection orientated in which traffic is routed across the network over a circuit (path) and connectionless networks in which traffic is independently routed across the network.

Communication networks frequently use restoration to protect the network during failures on the network. Such networks include Internet protocol (IP) and asynchronous transfer mode (ATM) networks. IP and ATM networks are example of connectionless networks and consequently do not have permanent protection paths reserved for any given path. Protection is achieved by determining a new route (re-routeing) for traffic after a failure has been detected. The network must have a level of capacity, or spare bandwidth, to ensure an alternate route is available. This can be 20% or so of the total bandwidth. In contrast a 1+1 allocation requires 100% over provision of bandwidth. Since the location of a failure is unknown prior to that failure, spare bandwidth must be evenly distributed across the network to cater for any possible failures.

For IP/ATM networks, the provision of a protection path in the network is straightforward. The links connecting equipment have large capacity relative to the small packets, or cells, carried over the links. The granularity is small and providing spare bandwidth is therefore not a problem.

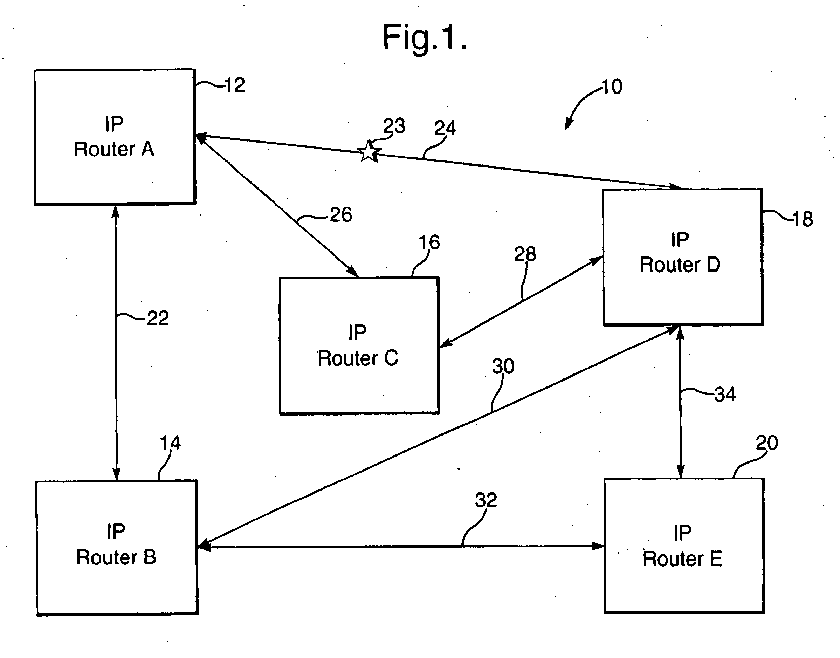

Figure 1 shows an IP mesh network 10 of IP routers; the IP routes, or nodes, 12 to 20 are configured in a mesh. Each link 22 to 34 has, for example, a nominal spare capacity of 20%. If a fault 23 occurs on link 24 between nodes 12 (IP Router A) and 14 (IP Router D), the resulting loss of path disrupts the transmission of packets from nodes A to D and from A to E via D. Once the fault has been detected by the routers an alternative route can be established. For example, packets destined for D from A can be re-routed by one of three paths: A-B-E-D, A-B-D or A-C-D. Packets destined for E from A could also be disrupted by the fault 23. Alternative routes avoiding the faulty link 24 are A-C-D-E, A-B-E and A-B-D-E.

A major factor that allows this type of re-routeing protection is the low granularity of the packets relative to the link bandwidth. This enables spare bandwidth in the alternative routes to be found easily. Furthermore, the ability to transport packets over links with different bit rates makes finding an alternate link more simple. For example, the link 24 between A-D could be 622Mbps, A-C could be 10Gbps, and so on. The nature of the data packets allows them to be sent along any link irrespective of that link's bit rate. There may, however, be a slight change in the delay time taken for the packet to traverse the network.

Optical networks presently have highly resilient protection based on a 1+1 provisioning. Once a path (working link) is set up, a separate path is established as a protection link. This protection link is dedicated to the working link.

The 1+1 system is robust but requires an over provision of bandwidth by 100% resulting in high expenditure to protect a network; double the amount of optical fibres and equipment is required if a link is to be protected. Furthermore, the protection path must be separate from the working path for both the equipment and the fibres.

Generalised multi protocol label switching (GMPLS) has been proposed for controlling optical networks. GMPLS allows for the centralised management of optical networks to develop into networks where connections are set up on request from client equipment. The traditional 1+1 protection system will most likely be replaced by a type of protection comprising restoration methods, as used in data networks. The potential advantages of this are the reduction in equipment costs and separacy tests since protection paths are set up dynamically taking account of failures.

However, this type of restoration has problems in optical networks. These problems are caused by the much larger granularity of the data packets when compared to present IP/ATM data networks. For example, in synchronised digital hierarchy (SDH), the basic unit is typically 155Mbps for synchronous transport module 1 (STM-1). STM-16 has a 2.5Gbps and STM-64 a 10 Gbps size. This can be broken down into 16 or 64 STM-1 basic units respectively but this STM-1 basic unit must be transported whole. Unlike packets, it is not possible to fragment the constituent packet over a number of paths. In contrast, for example, a 10G IP data stream has thousands of packets that can be separately routed, over any available bit rate.

When a failure occurs in an optical network, the optical network has insufficient capacity available to spread the signal across the network diversely. It is not possible to successfully re-route all the affected traffic due to the relatively large granularity of the packets compared to the link bandwidth.

Moreover, some traffic connections use contiguously concatenated interfaces. Such interfaces are typically used by routers, or switchers, for large bandwidth connections. Here, a number of basic units are added together (concatenated) to form a contiguous payload. For example, four 155 Mbps (STM-1) packets can be concatenated to form a 622Mbps payload (STM-4c).

There are strict rules determining how concatenated payloads can be transmitted. For example, the payloads must be transmitted together in consecutive positions in a frame, and they must occupy specific positions within the frame structure. Thus, unlike the example above, concatenated STM-16c and STM-64c traffic cannot be broken down into STM-1 units.

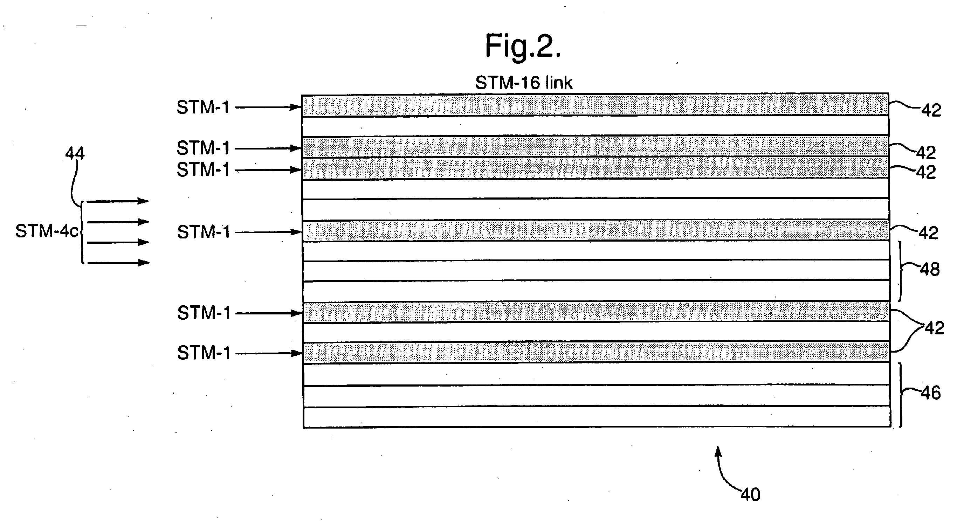

Network bandwidth fragmentation occurs as connections are set up and taken down. It is likely that sufficient bandwidth is available on a link for a concatenated payload, but the bandwidth can be in the wrong position to allow concatenated payloads to be transmitted. Figure 2 shows an example of such an occurrence. Referring to Figure 2, a STM-16 link 40 with a 2.5Gbps capacity transmits ten STM-1 payloads 42, each of 155Mbps. There is sufficient bandwidth to transmit a concatenated STM-4c payload 44 of 622 Mbps. However, fragmentation of the STM-1 payloads 42 has resulted in there being no way of transmitting the STM-4c payload since there is not a block of four by STM-1 bandwidth available. Two blocks of three by STM-1 bandwidth 46 and 48 are available, but these have insufficient bandwidth to transmit the payload 44. The signal can thus not be carried on this link.

Such fragmentations cause problems when restoration protection is implemented in an optical network. Restoration protection limits the bandwidth available across the network. Therefore the likelihood of finding spare bandwidth to restore a concatenated payload is small, making known restoration protection techniques inappropriate for contiguously concatenated interfaces.

The present invention aims to ameliorate the problems associated with implementing restoration protection in optical networks. Broadly, this is achieved by providing sufficient reserved bandwidth on the network's links which provides a restoration path to restore a failed link in the network.

US 5442620 discloses a communications network in which in the event of a node or link failure a loop-back-switch procedure is employed wherein traffic which enters a node on a service bandwidth is routed away from the node on a protection bandwidth. EP 0844755 describes a network in which traffic is prioritized into three classes A, B and C, according to its level of importance. In the event of a failure, class B traffic is diverted along a path that happens to be unused, as opposed to a path that is reserved for that purpose.

EP1056234 discloses a network in which, in the event of a failure, a new path is established, as opposed to using an existing alternative path which is reserved for that purpose.

According to one aspect of the invention there is provided a communications network as claimed in claim 1.

The invention also provided a system in an optical communication network for transmitting data between two nodes on the network as claimed in claim 2.

The invention also provides a method for restoring a failed link between two nodes on a communications network as claimed in claim 11.

Embodiments of the invention have the advantage that restoration paths can be implemented for connection orientated network, such as optical networks, by reserving a portion of a link's bandwidth for restoration. Traffic is diverted onto the restoration bandwidth if the preferred path is damaged or becomes inoperable. Contiguously concatenated payloads can be transmitted over the restoration path by reserving a block of bandwidth for restoration.

Furthermore, a reverter provides means for reverting diverted traffic back on to a failed link when the failed link becomes operable, thus providing the advantage of maintaining an even spread of restoration paths across the network.

Also, the fact that contiguously concatenated payloads can be converted to virtually concatenated payloads when a payload enters the optical network has the advantage that the virtually concatenated payloads can be transmitted over different links across the network. The virtually concatenated payloads are recombined at the exit of the network to a contiguously concatenated payload, thus providing a transparent transmission of the payload.

Embodiments of the present invention will now be described, by way of example only, and with reference to the drawings, in which:
Figure 1, referred to above, is a schematic representation of a communication network in a mesh configuration;
Figure 2, referred to above, is a schematic representation of an STM-16 link;
Figure 3 is a schematic representation of a network embodying the present invention; and
Figure 4 is a schematic representation of a conversion of a contiguous to virtually concatenated payload embodying the present invention.

Embodiments of the present invention to be described provide specifically allocated bandwidth in a network for restoration. This restoration bandwidth, or protection bandwidth, is not allocated to any specific path since it is not possible to determine where the restoration bandwidth is required until a failure occurs. It is, however, reserved for restoration. It is preferable to allocate the restoration bandwidth evenly throughout the network to ensure that every link has spare capacity allocated, dedicated for restoration.

System where bandwidth is shared for protection are known, for example, a 1:N multiplexed section protection system. However, such systems are limited in that the protection bandwidth is specified to a few designated paths, all travelling to and from the same point. Embodiments of the present invention provide restoration bandwidth spread across the network. There is no allocation to the paths that the bandwidth might be protecting should a failure occur. The protection is determined dynamically when a failure occurs.

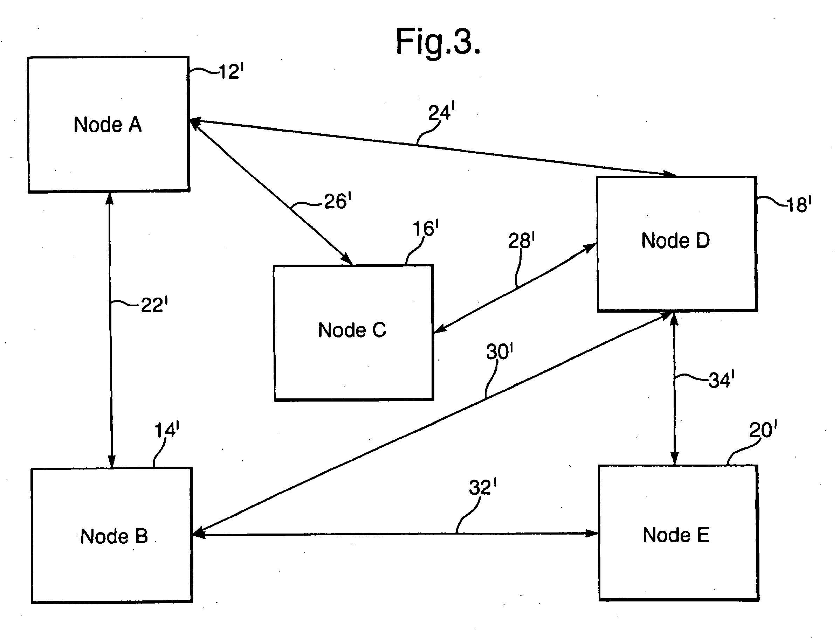

An example of how restoration bandwidth is used to restore a link is shown in Figure 3. Nodes 12', 14', 16', 18' and 20' are interconnected by links 22' to 34'. In this example each link has STM-16 capacity having STM-1 granularity. There are four connections between the nodes that uses link 24' these being the connections: 14' to 12' to 18', 12' to 18' and 12' to 18' to 20'. If link 24' fails, all of these connections are lost. However, due to the diversely available protection bandwidth, it is possible to restore the traffic through the following routes:
- four connections 14' to 12' to 18' can be protected as four connections 14' to 18';
- four connections 12' to 18' can be protected as four connections 12' to 16' to 18'; and
- four connections 12' to 18' to 20' can be protected as four connections 12' to 14' to 20'.

The method for determining failure is preferably derived from standard failure conditions defined in the transmission data standards. The process of finding an alternative route is determined by the use of the protocols used in the data networks for multi protocol label switching (MPLS) standard, or GMPLS standard implemented on optical networks.

The MPLS protocols of the data networks require modification to operate effectively in optical networks. Furthermore, suitable modifications to the protocols are required to recognise the existence of reserved restoration bandwidth. Such modifications ensure that the restoration bandwidth is not used for normal traffic; in this embodiment the restoration bandwidth must be used only for protecting paths lost through failure of that path. The modifications may require an additional class of set up requests and resource allocation.

The restoration bandwidth needs to be spread evenly across the network to provide protection against every possible failure. A typical failure is of a complete link. When such failures occur the preferred path for the traffic transmitted over that link is lost. As a result, these failures result in a large proportion of the protection bandwidth being utilised during the failure.

Once the failure has been repaired, the now operating link has no traffic because it's traffic has been re-routed. However, the protection bandwidth remains locked out since it continues to carry the previously damaged link's traffic. By locked out it is meant that the restoration bandwidth is still being used to provide a path for the traffic previously transmitted over the damaged link. Thus, the restoration bandwidth is no longer evenly spread across the network. If another failure occurs, it may be difficult to find sufficient restoration bandwidth to restore the subsequent failure.

In view of this, the protection bandwidth is revertive. By revertive, it is meant that the protected diverted traffic is reverted back to it's original path once the damaged link on which the diverted traffic previously travelled has been repaired. In this way the protection bandwidth is released for future use once the damaged link becomes operable.

In an alternative embodiment, it is possible to restore a failure without using the protection bandwidth should sufficient normal bandwidth be available on the network. Traffic can be re-routed on the normal bandwidth to avoid using the protection bandwidth. The routeing protocols are designed in this embodiment to re-route traffic from a damaged link using normal bandwidth, if it is available. If sufficient normal bandwidth is unavailable, the traffic is re-routed onto the protection bandwidth. In this embodiment, reversion is not essential when the protection bandwidth has not been used.

In certain circumstances when the traffic is re-routed over several links, it may be preferable to use the protection bandwidth on some links, whilst the normal bandwidth is used on other links. This will be dependent on the levels of traffic traversing each link.

In another alternative embodiment, the protection bandwidth is utilised for normal traffic on a casual basis when the protection bandwidth is not required. Preferably the casual traffic is low priority traffic and is dropped from the protection bandwidth as soon as a failure occurs on the network, and the protection bandwidth is required for re-routeing traffic.

In a further alternative embodiment, the protection bandwidth is virtual. By virtual it is meant that the protection bandwidth is not solely reserved for protection. In this further alternative embodiment, the routeing protocols are required to allocate protection bandwidth more evenly across the network to ensure a diverse availability of spare bandwidth. Suitable alarms should be raised if it becomes difficult to route a circuit without falling below a minimum threshold of spare bandwidth. Also, once a failure has been repaired, it is necessary to revert the bandwidth to ensure an even spread of spare bandwidth across the network.

Contiguously concatenated interfaces can be problematic for reversion due to the requirement for a single block of bandwidth. Finding an alternative route across the network can be difficult when restoration protection protocols are used and spare bandwidth is limited.

Contiguously concatenated payloads are converted to virtually concatenated payloads before transmission across the network to enable the network to use reversion. The virtually concatenated payload, which comprises associated blocks, can then be transported across the network by independently routing the blocks. As the associated blocks exit the optical network they are recombined into a contiguous block. Thus, the process is transparent to the client.

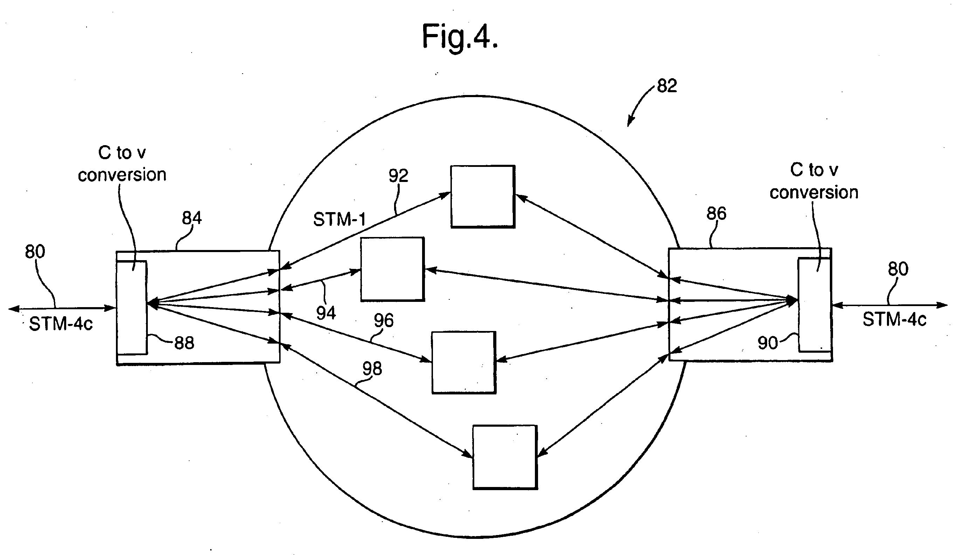

Referring to figure 4, a contiguously concatenated STM-4c payload 80 is traversing an optical network 82. At the ingress point 84 and egress point 86 on the optical network, the signal undergoes a contiguous to virtual conversion at the contiguous to virtual converters 88 and 90. The optical network now has four separate STM-1 payloads 92, 94, 96, 98 (or signals) to transmit, rather than a single STM-4c payload. It is, therefore, easier to route the signal across the network. It is not required to find one large allocation of bandwidth and each STM-1 payload can use different paths to cross the network. If a failure of a link does occur, alternative routes can be found more easily. The individual STM-1 payloads are easier to re-route than the larger single STM-4c payload. Furthermore, a failure is less likely to affect all of the STM-1 payloads because they can travel over different links. In which case, the restoration process has fewer signals to restore.

The four associated STM-1 payloads are suitably labelled so that each one reaches the required destination and is recombined in the required order with the other components of the original STM-4c payload. At the exit 86 from the optical network, the four STM-1 signals are combined and converted back to the single STM-4c contiguous payload 80 by the contiguous to virtual converter 90. Suitable buffering is likely to be required to cater for any time delays associated with the different time taken for each STM-1 payload to traverse the network.

It is particularly preferred to transport the payload as a virtually concatenated payload since a lot of existing transmission equipment can not handle complex contiguously concatenated payloads. Virtual concatenation thus allows contiguous signals to be transmitted on legacy equipment.

In this yet further alternative embodiment, such conversion provides a realistic way to handle contiguously concatenated payloads on a system where restoration protection is required. Contiguous concatenated interfaces are frequently encountered as many IP routers and data switches use them.

Costs of installing and maintaining a network embodying the present invention are greatly reduced since only a single infrastructure is required. It is not necessary to have double the amount of links, as a 1+1 protection system requires.

It is not necessary for all links in the network to provide restoration protection It is important to ensure that there is enough transmission bandwidth reserved for restoration protection such that an alternative path can be found. If there are multiple links between two nodes, only a proportion need bandwidth reserved for use as a restoration path.

Other embodiments of the method and system falling within the scope of the claims will be envisaged by a skilled person. For example, the present invention is applicable to other systems, for example SONET systems using STS-1 etc, as well as photonic systems that switch wavelength. Furthermore, a restoration path might be set up as a series of links, arranged in parallel. It may be possible to use several restoration paths simultaneously to restore a single link.

The embodiments described are not limited to optical networks. For example, SDH frames can be used to transport electrical signals and for Radio links. The embodiments described are applicable to any situation in which the units being transmitted are at a fixed bit rate and fairly large in contrast to IP/ATM packets. The present invention does however finds particular application to connection orientated communication networks.

## Claims

1. A communication network (82) comprising a plurality of nodes (12', 14', 16', 18', 20') connected by a plurality of links (22' to 34'), each link having a transmission bandwidth, a portion of the transmission bandwidth of at least some of the links being reserved for transmission of traffic diverted from a failed link to provide a restoration path for that diverted traffic, **characterized in that** the network further comprises a converter (88, 90) at an entry (84) to or exit (86) from the network for converting between a contiguously concatenated payload (80) and a plurality of virtually concatenated payloads (92, 94, 96, 98) for transmission of the plurality of virtually concatenated payloads over the at least some of the links of the network.

2. A system comprising a link (22' to 34') for a communications network (22) for transmitting data between two nodes (12', 14', 16', 18', 20') of the network, the network comprising a plurality of nodes connected by a plurality of links (22' to 34'), the link having a transmission bandwidth, a portion of the transmission bandwidth of at least some of the links being reserved for transmission of traffic diverted from a failed link amongst said plurality of links (22' to 34') to provide a restoration path for that diverted traffic, **characterized in that** the system further comprises a converter (88, 90) for being at an entry (84) to or exit (86) from the network for converting between a contiguously concatenated payload (80) and a plurality of virtually concatenated payloads (92, 94, 96, 98) for transmission of the plurality of virtually concatenated payloads over the at least some of the links of the network.

3. Network or system according to claim 1 or 2, wherein the portion reserved for restoration comprises a block of bandwidth.

4. A network according to claim 1, wherein each of the plurality of virtually concatenated payloads (92, 94, 96, 98) can be transmitted over different links.

5. Network or system according to any preceding claim, further comprising means for transmission of a low priority payload over the restoration portion of a given link if that restoration portion is not required for transmission of traffic diverted from a failed link.

6. Network or system according to any preceding claim, wherein the restoration path between any two nodes (12', 14', 16', 18', 20') connected by a single link comprises a plurality of links.

7. Network or system according to claim 6, wherein a restoration path extends over a plurality of links, including the portion of the transmission bandwidth for transmitting traffic of at least one of the links.

8. Network or system according to any preceding claim, comprising a reverter for reverting the diverted traffic to the failed link from the restoration path when the failed link becomes operable.

9. Network or system according to any preceding claim wherein the network (82) is for carrying synchronous digital hierarchy (SDH) or SONET signals.

10. Network or system according to any preceding claim wherein the network is an optical network (82).

11. A method for restoring a failed link between two nodes (12', 14', 16', 18', 20') of a communications network (82), wherein the network comprises a plurality of nodes connected by a plurality of links (22' to 34'), the links having a transmission bandwidth for transmitting traffic over the network; the method comprising the steps of: reserving a portion of the transmission bandwidth of at least some of the links for transmission of diverted traffic from the failed link, thereby providing a restoration path between the two nodes for the diverted traffic, **characterized in that** the method comprises converting the traffic between a contiguously concatenated payload (80) and a plurality of virtually concatenated payloads (92, 94, 96, 98) as the traffic enters or exits the network, wherein the plurality of virtually concatenated payloads are transmitted over the at least some of the links of the network.

12. A method according to claim 11, wherein the portion is a block of bandwidth.

13. A method according to claim 11, comprising transmitting each of the virtually concatenated payloads (92, 94, 96, 98) over a different link.

14. A method according to any one of claims 12 to 13, comprising transmitting low priority traffic over the restoration path when the link is operative.

15. A method according to any one of claims 11 to 14, comprising reserving the restoration path for transmission of a payload between the first and second nodes.

16. A method according to any one of claims 11 to 15, wherein the restoration path between any two nodes connected by a single node comprises a plurality of links.

17. A method according to claim 16, comprising extending a restoration path over a plurality of links, including a portion of the transmission bandwidth for transmitting traffic of at least one of the links.

18. A method according to any one of the claims 11 to 17, comprising reverting traffic on to the failed link from the restoration path when the failed link becomes operative.

## Patentansprüche

1. Kommunikationsnetz (82), umfassend eine Mehrzahl von Knoten (12', 14', 16', 18', 20'), die durch eine Mehrzahl von Verbindungsstrecken (22' bis 34') verbunden sind, wobei jede Verbindungsstrecke eine Übertragungsbandbreite aufweist, und ein Abschnitt der Übertragungsbandbreite wenigstens einiger der Verbindungsstrecken für die Übertragung von Verkehr reserviert ist, der von einer ausgefallenen Verbindungsstrecke umgeleitet wird, um einen Wiederherstellungsweg für diesen umgeleiteten Verkehr bereitzustellen, **dadurch gekennzeichnet, dass** das Netz ferner einen Konverter (88, 90) an einem Eingang (84) in das oder einem Ausgang (86) aus dem Netz zum Konvertieren zwischen einer zusammenhängend verketteten Nutzlast (80) und einer Mehrzahl von virtuell verketteten Nutzlasten (92, 94, 96, 98) zur Übertragung der Mehrzahl von virtuell verketteten Nutzlasten über wenigstens einige der Verbindungsstrecken des Netzes umfasst.

2. System, umfassend eine Verbindungsstrecke (22' bis 34') für ein Kommunikationsnetz (82) zur Übertragung von Daten zwischen zwei Knoten (12', 14', 16', 18', 20') des Netzes, wobei das Netz eine Mehrzahl von Knoten umfasst, die durch eine Mehrzahl von Verbindungsstrecken (22' bis 34') verbunden sind, die Verbindungsstrecke eine Übertragungsbandbreite aufweist und ein Abschnitt der Übertragungsbandbreite wenigstens einiger der Verbindungsstrecken für die Übertragung von Verkehr reserviert ist, der von einer ausgefallenen Verbindungsstrecke unter der Mehrzahl von Verbindungsstrecken (22' bis 34') umgeleitet wird, um einen Wiederherstellungsweg für diesen umgeleiteten Verkehr bereitzustellen, **dadurch gekennzeichnet, dass** das System ferner einen Konverter (88, 90) zur Anordnung an einem Eingang (84) in das oder einem Ausgang (86) aus dem Netz zum Konvertieren zwischen einer zusammenhängend verketteten Nutzlast (80) und einer Mehrzahl von virtuell verketteten Nutzlasten (92, 94, 96, 98) zur Übertragung der Mehrzahl von virtuell verketteten Nutzlasten über wenigstens einige der Verbindungsstrecken des Netzes umfasst.

3. Netz oder System nach Anspruch 1 oder 2, wobei der Abschnitt, der für die Wiederherstellung reserviert ist, einen Bandbreitenblock umfasst.

4. Netz nach Anspruch 1, wobei jede der Mehrzahl von virtuell verketteten Nutzlasten (92, 94, 96, 98) über verschiedene Verbindungsstrecken übertragen werden kann.

5. Netz oder System nach einem der vorhergehenden Ansprüche, ferner umfassend Mittel zur Übertragung einer Nutzlast niedriger Priorität über den Wiederherstellungsabschnitt einer bestimmten Verbindungsstrecke, wenn dieser Wiederherstellungsabschnitt nicht zur Übertragung von Verkehr benötigt wird, der von einer ausgefallenen Verbindungsstrecke umgeleitet wird.

6. Netz oder System nach einem der vorhergehenden Ansprüche, wobei der Wiederherstellungsweg zwischen beliebigen zwei Knoten (12', 14', 16', 18', 20'), die durch eine einzige Verbindungsstrecke verbunden sind, eine Mehrzahl von Verbindungsstrecken umfasst.

7. Netz oder System nach Anspruch 6, wobei sich ein Wiederherstellungsweg über eine Mehrzahl von Verbindungsstrecken erstreckt, einschließlich des Abschnitts der Übertragungsbandbreite zur Übertragung von Verkehr wenigstens einer der Verbindungsstrecken.

8. Netz oder System nach einem der vorhergehenden Ansprüche, umfassend einen Rückumleiter zum Rückumleiten des umgeleiteten Verkehrs zur ausgefallenen Verbindungsstrecke vom Wiederherstellungsweg, wenn die ausgefallene Verbindungsstrecke funktionsfähig wird.

9. Netz oder System nach einem der vorhergehenden Ansprüche, wobei das Netz (82) zum Übertragen von Synchron-Digital-Hierarchie (SDH)- oder SONET-Signalen ist.

10. Netz oder System nach einem der vorhergehenden Ansprüche, wobei das Netz ein optisches Netz (82) ist.

11. Verfahren zur Wiederherstellung einer ausgefallenen Verbindungsstrecke zwischen zwei Knoten (12', 14', 16', 18', 20') eines Kommunikationsnetzes (82), wobei das Netz eine Mehrzahl von Knoten umfasst, die durch eine Mehrzahl von Verbindungsstrecken (22' bis 34') verbunden sind, und die Verbindungsstrecken eine Übertragungsbandbreite zum Übertragen von Verkehr über das Netz aufweisen; wobei das Verfahren die folgenden Schritte umfasst: Reservieren eines Abschnitts der Übertragungsbandbreite wenigstens einiger der Verbindungsstrecken für die Übertragung von umgeleitetem Verkehr von der ausgefallenen Verbindungstrecke und **dadurch** Bereitstellen eines Wiederherstellungswegs zwischen den beiden Knoten für den umgeleiteten Verkehr, **dadurch gekennzeichnet, dass** das Verfahren ein Konvertieren des Verkehrs zwischen einer zusammenhängend verketteten Nutzlast (80) und einer Mehrzahl von virtuell verketteten Nutzlasten (92, 94, 96, 98), wenn der Verkehr in das Netz eintritt oder daraus austritt, umfasst, wobei die Mehrzahl von virtuell verketteten Nutzlasten über wenigstens einige der Verbindungsstrecken des Netzes übertragen wird.

12. Verfahren nach Anspruch 11, wobei der Abschnitt ein Bandbreitenblock ist.

13. Verfahren nach Anspruch 11, umfassend ein Übertragen jeder der virtuell verketteten Nutzlasten (92, 94, 96, 98) über eine andere Verbindungsstrecke.

14. Verfahren nach einem der Ansprüche 12 bis 13, umfassend ein Übertragen von Verkehr niedriger Priorität über den Wiederherstellungsweg, wenn die Verbindungsstrecke funktionsfähig ist.

15. Verfahren nach einem der Ansprüche 11 bis 14, umfassend ein Reservieren des Wiederherstellungswegs für die Übertragung einer Nutzlast zwischen den ersten und zweiten Knoten.

16. Verfahren nach einem der Ansprüche 11 bis 15, wobei der Wiederherstellungsweg zwischen beliebigen zwei Knoten, die durch einen einzigen Knoten verbunden sind, eine Mehrzahl von Verbindungsstrecken umfasst.

17. Verfahren nach Anspruch 16, umfassend ein Erstrecken eines Wiederherstellungswegs über eine Mehrzahl von Verbindungsstrecken, einschließlich eines Abschnitts der Übertragungsbandbreite zum Übertragen von Verkehr wenigstens einer der Verbindungsstrecken.

18. Verfahren nach einem der Ansprüche 11 bis 17, umfassend ein Rückumleiten von Verkehr zur ausgefallenen Verbindungsstrecke vom Wiederherstellungsweg, wenn die ausgefallene funktionsfähig wird.

## Revendications

1. Réseau de communication (82) comprenant une pluralité de noeuds (12',14',16',18',20') connectés par une pluralité de liaisons (22' à 34'), chaque liaison ayant une bande passante de transmission, une portion de la bande passante de transmission d'au moins certaines des liaisons étant réservée pour la transmission du trafic dévié d'une liaison défaillante afin de fournir un conduit de restauration pour ce trafic dévié, **caractérisé en ce que** le réseau comprend en outre un convertisseur (88,90) à une entrée (84) dans ou une sortie (86) du réseau pour convertir d'une charge utile à concaténation contiguë (80) en une pluralité de charges utiles à concaténation virtuelle (92,94,96,98) en vue d'une transmission de la pluralité de charges utiles à concaténation virtuelle via au moins certaines des liaisons du réseau.

2. Système comprenant une liaison (22' à 34') pour un réseau de communication (22) transmettant des données entre deux noeuds (12',14',16',18',20') du réseau, le réseau comprenant une pluralité de noeuds connectés par une pluralité de liaisons (22' à 34'), la liaison ayant une bande passante de transmission, une portion de la bande passante de transmission d'au moins certaines des liaisons étant réservée pour la transmission du trafic dévié d'une liaison défaillante parmi ladite pluralité de liaisons (22' à 34') afin de fournir un conduit de restauration pour ce trafic dévié, **caractérisé en ce que** le système comprend en outre un convertisseur (88,90) étant à une entrée (84) dans ou une sortie (86) du réseau pour convertir d'une charge utile à concaténation contiguë (80) en une pluralité de charges utiles à concaténation virtuelle (92,94,96,98) en vue d'une transmission de la pluralité de charges utiles à concaténation virtuelle via au moins certaines des liaisons du réseau.

3. Réseau ou système selon la revendication 1 ou 2, dans lequel la portion réservée pour la restauration comprend un bloc de bande passante.

4. Réseau ou système selon la revendication 1, dans lequel chacune de la pluralité de charges utiles à concaténation virtuelle (92,94,96,98) peut être transmise via différentes liaisons.

5. Réseau ou système selon une quelconque des revendications précédentes, comprenant en outre des moyens de transmission d'une charge utile à faible priorité via la portion de restauration d'une liaison donnée si cette portion de restauration n'est pas requise en vue de la transmission du trafic dévié d'une liaison défaillante.

6. Réseau ou système selon une quelconque des revendications précédentes, dans lequel le conduit de restauration entre n'importe lequel de deux noeuds (12',14',16',18',20') connectés par une liaison unique comprend une pluralité de liaisons.

7. Réseau ou système selon la revendication 6, dans lequel un conduit de restauration s'étend via une pluralité de liaisons, y compris la portion de la bande passante de transmission pour transmettre le trafic d'au moins une des liaisons.

8. Réseau ou système selon une quelconque des revendications précédentes, comprenant un inverseur pour inverser le trafic dévié vers la liaison défaillante depuis le conduit de restauration lorsque la liaison défaillante devient opérante.

9. Réseau ou système selon une quelconque des revendications précédentes, dans lequel le réseau (82) transporte des signaux de hiérarchie numérique synchrone (SDH) ou SONET.

10. Réseau ou système selon une quelconque des revendications précédentes, dans lequel le réseau est un réseau optique (82).

11. Procédé de restauration d'une liaison défaillante entre deux noeuds (12' ,14' ,16' ,18' ,20') d'un réseau de communication (82), dans lequel le réseau comprend une pluralité de noeuds connectés par une pluralité de liaisons (22' à 34'), les liaisons ayant une bande passante de transmission pour transmettre du trafic via le réseau ; le procédé comprenant les étapes consistant à : réserver une portion de la bande passante de transmission d'au moins certaines des liaisons pour la transmission du trafic dévié de la liaison défaillante, en fournissant ainsi un conduit de restauration entre les deux noeuds, destiné au trafic dévié, **caractérisé** ne ce que le procédé comprend la conversion du trafic d'une charge utile à concaténation contiguë (80) en une pluralité de charges utiles à concaténation virtuelle (92,94,96,98) lorsque le trafic entre ou sort du réseau, dans lequel la pluralité de charges utiles à concaténation virtuelle sont transmises via au moins certaines des liaisons du réseau.

12. Procédé selon la revendication 11, dans lequel la portion est un bloc de bande passante.

13. Procédé selon la revendication 11, comprenant la transmission de chacune des charges utiles à concaténation virtuelle (92,94,9,6,98) via une liaison différente.

14. Procédé selon une quelconque des revendications 12 à 13, comprenant la transmission du trafic à faible priorité via le conduit de restauration lorsque la liaison est opérante.

15. Procédé selon une quelconque des revendications 11 à 14, comprenant la réservation du conduit de restauration pour la transmission d'une charge utile entre le premier et le second noeud.

16. Procédé selon une quelconque des revendications 11 à 15, dans lequel le conduit de restauration entre n'importe lequel de deux noeuds connectés par une liaison unique comprend une pluralité de liaisons.

17. Procédé selon la revendication 16, comprenant l'extension d'un trajet de restauration via une pluralité de liaisons, y compris une portion de la bande passante de transmission pour transmettre le trafic d'au moins une des liaisons.

18. Procédé selon une quelconque des revendications 11 à 17, comprenant l'inversion du trafic vers la liaison défaillante depuis le conduit de restauration lorsque la liaison défaillante devient opérante.
